(19) Europäisches Patentamt

European Patent Office

Office européen des brevets

(11) Veröffentlichungsnummer: **0 332 928 B1**

(12) **EUROPÄISCHE PATENTSCHRIFT**

(45) Veröffentlichungstag der Patentschrift: **14.10.92**

(21) Anmeldenummer: **89103540.4**

(22) Anmeldetag: **01.03.89**

(51) Int. Cl.⁵: **C09K 3/10**, C09K 21/14

(54) **Brandschutzelemente.**

(30) Priorität: **12.03.88 DE 3808275**

(43) Veröffentlichungstag der Anmeldung:
**20.09.89 Patentblatt 89/38**

(45) Bekanntmachung des Hinweises auf die
Patenterteilung:
**14.10.92 Patentblatt 92/42**

(84) Benannte Vertragsstaaten:
**CH DE FR GB IT LI NL**

(56) Entgegenhaltungen:
**EP-A- 0 010 714**
**DE-A- 3 306 698**
**US-A- 4 720 414**

(73) Patentinhaber: **BAYER AG**

**W-5090 Leverkusen 1 Bayerwerk(DE)**

(72) Erfinder: **von Bonin, Wulf, Dr.**
**Droste-Hülshoff-Strasse 9**
**W-5068 Odenthal(DE)**
Erfinder: **von Gizycki, Ulrich, Dr.**
**Wiembachallee 24**
**W-5090 Leverkusen 3(DE)**

EP 0 332 928 B1

**Beschreibung**

Die vorliegende Erfindung betrifft Brandschutzelemente, die insbesondere als Verschlußmittel für den vorbeugenden Brandschutz verwendbar sind. Die erfindungsgemäßen Brandschutzelemente werden im feuchten, flexiblen Zustand eingebaut und sind nach dem Trocknen mechanisch verfestigt, brandabweisend und gegebenenfalls weitgehend gasdicht.

Es ist bekannt (siehe z.B. DE-OS 26 49 222), bestimmte Schaumstoffe durch Imprägnierung brandwidrig auszurüsten. Hierzu werden insbesondere Schaumstoffe verwendet, die nach der Imprägnierung und Trocknung möglichst brandwidrig, jedoch mechanisch dem Ausgangsschaumstoff möglichst ähnlich sind. So imprägnierte und getrocknete Schaumstoffe werden auf dem Schallschutz-, Matratzen-und Polstersektor eingesetzt.

Es ist auch bekannt (siehe Firmenschrift AEG-Telefunken Geaquello®-Kabelvergußsystem), einen saugfähigen Schwamm aus cellulosischen Materialien in trockener und zusammengedrückter Form in einen Hohlraum einzubringen und dann eine wäßrige Aufschlämmung von Brandschutzmörtel oder -zement einzufüllen. Dabei quillt der saugfähige Schwamm auf, nimmt den wäßrigen Mörtel oder Zement auf und verhindert so vor dem Erhärten dessen Herauslaufen aus dem Hohlraum. Hierbei erfolgt das Einbringen von Schwamm (in trockener Form) und Mörtel- oder Zementdispersion getrennt. Das bedeutet: Die Verschmutzungen verursachende Herstellung der hydraulisch härtenden Masse und deren Gießen muß vor Ort erfolgen. Außerdem müssen Schalungen erstellt werden.

Weiterhin ist es bekannt (Fire Journal, März 1986, Seite 41 ff.), Kabeldurchführungen oder Mauerdurchbrüche durch Zumauern oder Verschließen mit Brandschutzkitten, Brandschutzmörteln, Siliconschäumen oder intumeszierenden Massen (gegebenenfalls in Verbindung mit Mineralwollplatten) gegen das Durchschlagen von Feuer zu schützen. Nachteilig ist hierbei die Starrheit und Sprödigkeit des Verschlußmaterials und der verschmutzende Umgang mit vor Ort herzustellenden und zu vergießenden Mörteln und staubenden Mineralwollteilen, sowie die aufwendige präzise Anpassung der Brandschutzmasse, die notwendig ist, um einen Raumabschluß mit ausreichender Gasdichte zu erhalten.

Schließlich ist noch bekannt (z.B. Intumex®PS-System), Feuerdurchtritte zu erschweren, indem man Löcher oder Durchbrüche mit kleinformatigen Säckchen ausfüllt, die mit Sand, intumeszierenden Materialien und/oder Schaumstoffteilchen mit brandwidrigem Charakter gefüllt sind. Solche Säckchen gestatten es aber nicht, schmale Spalten, enge Löcher und komplizierte geometrische Formen aufweisende Hohlräume rauchgasdicht zu verschließen, vielmehr bilden sich eher komplizierte geometrische Formen aufweisende Hohlräume. Außerdem ist die Haftung der Säckchen untereinander und am umgebenden Material unzureichend, so daß so nur mechanisch wenig stabile Brandschutzabdichtungen hergestellt werden können. Die mechanischen Eigenschaften von Schaumstoffen mit brandwidrigem Charakter sind zwar relativ günstig, aber auch solche Teile anstatt der Säckchen sind für einen dauerhaften Verschluß nicht geeignet. Da sie vor, während und nach dem Verschließen von Löchern oder Durchbrüchen elastisch sein müssen, ist in ihnen notwendigerweise ein erheblicher Anteil an organischem Material enthalten, der der Brandwidrigkeit prinzipiell entgegensteht.

Die vorliegende Erfindung weist die zuvor dargestellten Nachteile bisheriger Brandschutzmaßnahmen überraschenderweise nicht auf.

Es wurden nun Brandschutzelemente gefunden, die

a) Schaumstoffkörper, die in feuchtem Zustand elastisch sind und

b) eine flüssige, Feuerwidrigkeit vermittelnde Imprägnierung enthalten, die dadurch gekennzeichnet sind, daß die Imprägnierung anorganische und/oder organische Bindemittel, Füllstoffundein Lösungs-oder Dispergiermittel enthält, wobei das Gewichtsverhältnis von Bindemittel zu Füllstoff von 1 bis 35 zu 99 bis 65 und das Gewichtsverhältnis der gesamten Feststoffe zu Lösungs- oder Dispergiermittel 50 bis 85 zu 50 bis 15 beträgt, der nicht-flüchtige Anteil der Imprägnierung mehr als 100 Gew.-%, bezogen auf den ursprünglichen Schaumstoffkörper, ausmacht, sich a) und/oder b) nach dem Einbau durch Trocknen verfestigen und die Brandschutzelemente vor dem Einbau gegen Feuchtigkeitsverlust geschützt werden.

Diese Brandschutzelemente können in komprimiertem Zustand in die zu verschließenden Öffnungen, Fugen und Hohlräume eingebracht werden und dichten diese dann infolge ihrer Flexibilität und Rückstellkräfte zuverlässig ab. Sie können auch flächig, z.B. als Schutzbeschichtung oder als Umwicklung, zum Einsatz kommen.

Die erfindungsgemäßen Brandschutzelemente besitzen, sofern sie eine wäßrige Imprägnierung enthalten, bereits im feuchten Zustand Brandschutzeigenschaften. Trotzdem läßt man sie im allgemeinen mit dem Mauerwerk zusammen im Laufe der Zeit unter den jeweils herrschenden Bedingungen austrocknen.

Bei der Trocknung gewinnen die erfindungsgemäßen Brandschutzelemente Stabilität, z.B. gegen atmosphärische Einflüsse. Während der Trocknung kann auch eine Härtung der Brandschutzelemente erfolgen, z.B. durch den Ablauf von Vernetzungsreaktionen. Das bedeutet, daß es notwendig ist, die erfindungsgemäßen Brandschutzelemente vor ihrem Einsatz z.B. durch geeignete Verpackung und Lagerung gegen vorzeitiges Austrocknen und/oder Härten zu schützen. Wenn man beispielsweise Folien für eine derartige Verpackung wählt, kann man die Brandschutzelemente gegebenenfalls in verpackter Form, gegebenenfalls nach Öffnung der Verpackung, einbauen, weil dann die Brandlast der Verpackung vernachlässigbar ist.

Beim Trocknen findet im allgemeinen kein Schrumpf statt, weil die Rückstellkräfte der komprimierten Schaumstoffkörper dies verhindern. Durch den Trocknungsprozeß wird eine haftende und abdichtende Bindung der Brandschutzelemente untereinander und zwischen ihnen und dem umgebenden Material hergestellt, bei dem es sich z.B. um Mauerwerk, Metall oder Kabelmäntel handeln kann. Weiterhin werden durch den Trocknungsprozeß die Brandschutzelemente vom elastischen Zustand in einen härteren, mechanisch stabilen, nicht mehr reversibel komprimierbaren Zustand übergeführt.

Da die Schaumstoffkörper erfindungsgemäßer Brandschutzelemente flexibel sind und der Binder in der Feuerwidrigkeit vermittelnden Imprägnierung auch eine gewisse Zähigkeit in die Imprägnierung einbringt, haben mit den erfindungsgemäßen Brandschutzelementen hergestellte Füllungen und Verschlüsse keinen spröden und brüchigen Charakter, wie das z.B. bei Mörtel- oder Mineralfaserschotts der Fall ist, sondern sie können ohne zu stauben bearbeitet, z.B. durchbohrt werden, ein zunehmend wichtiger werdendes Kriterium. Die mit erfindungsgemäßen Brandschutzelementen hergestellten Füllungen und Verschlüsse sind daher auch gegenüber Schwingungen und dynamischen Belastungen wesentlich beständiger als spröde, rißanfällige Mörtelverschlüsse.

Als Schaumstoffkörper können solche mit sehr geringem Raumgewicht verwendet werden und die feuerwidrige Imprägnierung kann verhältnismäßig geringe Mengen an Binder enthalten. Dadurch ist es möglich, erfindungsgemäße Brandschutzelemente mit relativ geringen Mengen an organischem Material herzustellen, ohne deren anwendungstechnisch hervorragende Funktionsfähigkeit zu beeinträchtigen. Beispielsweise können so die Brandklassen B 1 oder A 2 (DIN 4102) in vielen Fällen erreicht werden.

Die Art der Schaumstoffkörper, die Art der Imprägnierung und das Mengenverhältnis von Imprägnierung zu Schaumstoffkörpern kann breit variiert werden. Erfindungsgemäße Brandschutzelemente können deshalb auf die jeweiligen anwendungstechnischen Erfordernisse individuell eingestellt werden, z.B. im Hinblick auf Trockenraumgewicht, Haftungseigenschaften, Isolationsvermögen und Rauchgasdichte.

Bei den Schaumstoffkörpern kann die Porenzahl beispielsweise 5 bis 500 pro cm$^2$ und die Luftdurchlässigkeit beispielsweise 20 bis 250 l pro 100 cm$^2$ bei 5 cm Dicke und 10 Pascal Unterdruck betragen. Vorzugsweise sind diese Parameter 10 bis 300 (Porenzahl) und 50 bis 150 (Luftdurchlässigkeit).

Ein weiterer Vorteil der erfindungsgemäßen Brandschutzelemente ist, daß sie als flexible und reversibel komprimierbare Elemente vorfabriziert werden können, die unmittelbar vor ihrer Verwendung und dem damit verbundenen Trocknen noch sehr leicht geschnitten, gelocht oder sonstwie nachbearbeitet werden können. Weiterhin entfallen ein genaues Zumessen und Zuschneiden von Einbauteilen und der Umgang an der Einbaustelle mit Mörteln, Kitten, Giesdispersionen, Reaktivsystemen, Pulverstäuben, Fasern und Flüssigkeiten, was aus arbeitshygienischen Gründen sehr erwünscht ist.

Erfindungsgemäße Brandschutzelemente können auch mit bereits bekannten Elementen und Maßnahmen für einen vorbeugenden Brandschutz kombiniert werden, beispielsweise beim Verschließen von Kabelzwickeln und Schottfugen oder beim Abdecken von Leitungen und Kabelmänteln, Mineralwollplatten, Kunststoffteilen, Holzwänden, Mauern oder Metallteilen.

Die Feuerwidrigkeit vermittelnde Imprägnierung kann sich intumeszierend oder nicht intumeszierend verhalten. Sie kann während oder nach dem Ausbrennen der organischen Anteile ein feuerbeständiges, gegebenenfalls sich endotherm verhaltendes und gegebenenfalls poröses Mineralgerüst aus nicht brennbaren Füllstoffen bilden und gegebenenfalls sintern, verglasen oder schmelzen und so einen besonders wirksamen Raumabschluß und eine gute Isolierwirkung gegen Flammendurchtritt und Brandgase bewirken. Um das Abbrennen der Pyrolysegase oder des organischen Anteils der Brandschutzelemente zu erschweren, kann die Imprägnierung Wasser, Ammoniak, Kohlendioxid, Stickstoff, Phosphor, Antimon und/oder Halogen enthalten und/oder im Brandfall abspalten und in den Schottbereich oder Flammenraum abgeben. Diese Prozesse sind zusätzlich wirksam, wenn sie endotherm verlaufen. Sie können unterstützt werden durch sonstige, parallel verlaufende endotherme Prozesse, z.B. Schmelz-, Sublimations-, Verdampfungs-, Dissoziations-, Umlagerungs-, Abspaltungs- oder Porosierungsprozesse und so die Schutzwirkung erfindungsgemäßer Brandschutzelemente verlängern und verbessern.

Auf diese Weise können die erfindungsgemäßen Brandschutzelemente im Brandfalle eine isolierende Schutzzone bilden, die zumeist mineralisch verstärkt oder mineralisch aufgebaut und thermisch und mechanisch bis zu Temperaturen von mindestens 400°C, vorzugsweise bis zu Temperaturen von über 1000°C und Zeiten bis mindestens 30 Min., vorzugsweise bis über 90 Min., beständig ist.

Erfindungsgemäße Brandschutzelemente können beispielsweise zum Verschluß von Fugen, Wand- oder Mauerdurchbrüchen, zur Abdichtung von Kabelsträngen und zum Schutz oder zur Isolation von Rohren, Tragkonstruktionen, Abschottungen, Wänden und Behältern verwendet werden. Die Brandschutzelemente können beliebig dimensioniert sein und beispielsweise als Wandplatten, Mauerbestandteile, Quader, Granulate, quasi-endlose Profile, Bänder, Halbschalen, Behälter, Pfropfen oder Gitter ausgebildet sein.

Der nicht flüchtige Anteil der Imprägnierung beträgt mehr als 100 Gew.-% und bevorzugt 200 bis 800 Gew.-% des ursprünglichen Schaumstoffkörpers.

Erfindungsgemäße Brandschutzelemente stellen feuchte, imprägnierte, komprimierbare Schaumstoffkörper dar. Die komprimierbaren Schaumstoffkörper sind vorzugsweise weitgehend reversibel komprimierbare (= elastische), weiche Polyurethanschäume. Es kann sich aber auch um sonstige organische und/oder anorganische Schaumstoffkörper handeln, z.B. solche auf der Basis von Asbest-, Mineralfaser-, Silicon-, Phosphazenschäumen, gemischt anorganisch-organischen Schaumstoffen, Celluloseschäumen, Proteinschäumen, Naturschwämmen, Phenolharz-, Harnstoffharz-, Melaminharz-, Dicyandiamidharz- oder Polyimidharzschaumstoffen, Schaumstoffen auf Basis von in Dispersion, Lösung oder direkt verschäumten Polymeren wie Natur- oder Synthesekautschuken, Polyolefinen, Polyacrylaten, Polyamiden, Polyethern, Polyestern, Polyvinylhalogeniden, Polyvinylestern oder Polyvinylethern.

Vorzugsweise werden zumindest teilweise offenporige Schaumstoffe eingesetzt, um das Eindringen der Imprägnierung zu erleichtern, beispielsweise sogenannte retikulierte Schaumstoffe, deren Zellen z.B. durch mechanische Behandlung geöffnet wurden. Die Schaumstoffkörper können gegebenenfalls organische und/oder anorganische Füllstoffe und/oder Fasern enthalten. Sie können auch aus vernetzbarem oder vernetztem Material aufgebaut sein.

Weiterhin sind Schaumstoffkörper bevorzugt, deren Rückstellkräfte und Elastizität zumindest so groß ist, daß bei 50 %iger Kompression nach 1 Stunde bei 20°C wieder weitgehend, d.h. beispielsweise zu mindestens 75 %, die ursprüngliche Gestalt wieder hergestellt wird.

Weiterhin sind Schaumstoffkörper bevorzugt, die von Wasser oder den verwendeten organischen Lösungsmitteln nicht aufgelöst werden und deren lineare Quellung in diesen Medien unter 15 % liegt.

Weiterhin sind Schaumstoffkörper bevorzugt, die sich auf mindestens 50 % ihres Normalvolumens komprimieren lassen und die Raumgewichte von weniger als 200 kg/m$^3$, besonders bevorzugt weniger als 80 kg/m$^3$ und insbesondere von 5 bis 50 kg/m$^3$, aufweisen.

Unter der Bezeichnung "Schaumstoffkörper" werden hier auch räumliche Netz- und Maschenwerke, Vliese, Gelege, Gewirke, Gestricke, Gewirre und Geschlinge verstanden, sofern sie die vorstehenden Kriterien erfüllen.

Bei der flüssigen, Feuerwidrigkeit vermittelnden Imprägnierung kann es sich z.B. um Lösungen, Emulsionen, Dispersionen oder Aufschlämmungen handeln, die mindestens eine bei Raumtemperatur flüssige, d.h. feucht wirkende Komponente enthalten. Die flüssige Komponente verleiht der Imprägnierung Geschmeidigkeit und/oder Fließfähigkeit. Vorzugsweise handelt es sich bei der flüssigen Komponente um eine wäßrige Phase. Es kommen aber auch nicht-wäßrige Flüssigkeiten und deren Gemische mit Wasser in Betracht. Beispiele für nicht wäßrige Flüssigkeiten sind Alkohole, Ester, Ketone, Ether, aliphatische und aromatische Kohlenwasserstoffe, Halogenkohlenwasserstoffe und beliebige Gemische dieser Flüssigkeiten.

Es kann sich bei den nicht-wäßrigen Flüssigkeiten auch um solche handeln, die nach Imprägnierung infolge chemischer Prozesse, z.B. durch Oxidation, Hydrolyse und/oder Vernetzung in einen mechanisch festeren oder witterungsstabileren Zustand übergehen. Beispielsweise kommen hierfür gegebenenfalls in Lösung oder z.B. in wäßriger Dispersion vorliegende Methylolverbindungen, Polyisocyanate, Isocyanatprepregs, lufttrocknende Lackharze, wasservernetzbare Siliconverbindungen und lufthärtende polymerisationsfähige Verbindungen, gegbenenfalls in aktivierter Form in Frage. Vorzugsweise greifen die Flüssigkeiten die Schaumstoffkörper nicht an, beeinträchtigen ihre Rückstellfähigkeit nur geringfügig, gar nicht oder verbessern sie sogar und lassen sie in der Regel um nicht mehr als 15 %, vorzugsweise nur unter 10 %, anquellen, wenngleich prinzipiell auch höhere Quellungsgrade möglich sind.

Aus brandtechnischen und toxikologischen Gründen sind Feuerwidrigkeit vermittelnde Imprägnierungen auf wäßriger Basis oder auf der Basis wäßriger Lösungen und/oder Dispersionen, die anorganische und/oder organische Bindemittel enthalten oder darstellen, bevorzugt. Als flüssige, Feuerwidrigkeit vermittelnde Imprägnierung können beispielsweise handelsübliche, gegebenenfalls intumeszierende Brandschutzanstriche für Holz oder Metalle verwendet werden, insbesondere solche auf wäßriger Basis.

Die Imprägnierungen enthalten neben Bindemitteln im allgemeinen anorganische und/oder organische Füllstoffe und Hilfsstoffe. Die Hilfsstoffe können z.B. dazu dienen, die rheologischen Eigenschaften, die Farbe, die Oberflächenspannung, den Geruch, das Feststoff/Wasser-Verhältnis, die Sedimentation, die biologische Beständigkeit, den Alterungsschutz, die Intumeszenz, die Strahlenreflexion, die Verdickung, den pH-Wert und/oder den Korrosionsschutz in gewünschter Weise einzustellen oder zu modifizieren.

Wenngleich das in der Imprägnierung enthaltene feuchte Bindemittel, aus dem die Imprägnierung auch alleine bestehen kann, der Imprägnierung Eindringungsfähigkeit in den Schaumstoffkörper und Geschmeidigkeit bei Raumtemperatur verleihen, wobei die Flexibilität des Schaumstoffkörpers prinzipiell aufrechterhalten bleibt, so muß das Bindemittel nach dem Trocknen nicht notwendigerweise flexibel bleiben. Bindemittel, die auch nach dem Trocknen noch eine gewisse Eigenflexibilität aufweisen, sind jedoch bevorzugt. Oftmals reicht die Flexibilität der Schaumstoffkörper aus, um den erfindungsgemäßen Brandschutzelementen auch nach dem Trocknen eine hinreichende Stabilität gegen Schwingungen und mechanische Stöße zu verleihen.

Als Bindemittel für die Imprägnierungen kommen anorganische und/oder organische Materialien, vorzugsweise in wäßriger Formulierung, in Frage. Das gleich gilt für die mit den Bindemitteln gegebenenfalls zu bindenden Hilfs- und/oder Füllstoffe. Füllstoffe verbessern im allgemeinen die Feuerwidrigkeit beträchtlich.

Es sind solche Bindemittel, Füll- und Hilfsstoffe bevorzugt, die wasserunlöslich sind oder beim oder nach dem Trocknen in einen wasserunlöslichen oder wasserschwerlöslichen Zustand übergehen. Bindemittel können auch durch Reaktion mit Bestandteilen der Luft oder Reaktionen mit Füll- oder Hilfsstoffen, z.B. zusätzlichen Vernetzern, in einen wasserunlöslichen Zustand übergehen.

Als anorganische Bindemittel kommen beispielsweise in Betracht:
Alkalisilikatlösungen, Lösungen oder Dispersionen von Kieselsolen, Mischsilikaten, Zementen, Gipsen, Magnesiumoxichlorid, Zink-, Magnesium- und/oder Aluminiumphosphaten und -phosphonaten, sonstigen Sulfaten, Phosphaten und/oder Boraten von Ammoniak, Aminen oder Metallen der ersten bis dritten Gruppe des periodischen Systems der Elemente, wobei als Phosphate neben Orthophosphaten auch Metaphosphate, Pyrophosphate und Polyphosphate sowie Phosphonate in Betracht kommen und als Borate auch Polyborate.

Bevorzugt sind solche Zubereitungen, die filmbildende Komponenten enthalten, z.B. Silikat-Lösungen, oder solche, die im Brandfalle Bindemitteleigenschaften entwickeln, z.B. gegebenenfalls zur Löslichkeitsmodifizierung gecoatete oder eingekapselte Phosphorsäuren, Borsäuren, insbesondere neutral reagierende und schwerlösliche Ammoniumphosphate und -polyphosphate. Kombinationen verschiedener Bindemittel und Füllstoffe kommen selbstverständlich auch in Betracht.

Organisch-wäßrige Bindemittel können z.B. wäßrige Lösungen und/oder Dispersionen von organischen Bindemitteln sein, vorzugsweise Kunststofflatices oder -dispersionen mit gegebenenfalls (selbst-)vernetzenden Eigenschaften. Auch organische Lösungsmittel oder organische Bindemittellösungen können Verwendung finden, sie sind jedoch nicht bevorzugt.

Als organische Bindemittel kommen beispielsweise in Frage: Wasserlösliche Proteine und Kohlehydrate, z.B. verschiedene Zucker und deren Oligomere, Melassen, Schlempen, Sulfitablaugen, Stärken, Cellulosen und deren Modifizierungs- und Abbauprodukte, Eiweißprodukte, Kaseine, Naturgumme, Polycarbonsäuren und deren Salze, Polyvinylether, Polyvinylalkohole, Polyacrylamide, Polyether, Polyalkylenoxide, Polyvinylpyrrolidone, Polyacetale, Polyurethane, Polymethylolverbindungen auf der Basis von Phenolen, Harnstoffe, Dicyandiamid, Melamin, Polyvinylamide, Polymere auf der Basis Methacryl-, Acryl-, Malein-, Fumar- oder Itaconsäure und deren Metall-, Ammonium- und Imidsalze sowie Copolymere, die mehr oder weniger wasserlöslich sind und solche Gruppierungen enthalten. Vorzugsweise werden Polymerlatices oder -dispersionen eingesetzt, z.B. solche auf Basis von Polymeren oder Copolymeren von Olefinen, Cycloolefinen, Diolefinen; aliphatischen, araliphatischen und/oder aromatischen Polyolefinen, Vinylethern, Vinylestern, Vinylamiden, (Meth)Acrylestern, -amiden, -nitrilen, insbesondere auf der Basis von weitgehend aliphatischen Spezies, z.B. Ethylen-Vinylacetat-Copolymeren, Ethylen-Vinylalkohol-Copolymeren, Ethylen-(Meth)-Acrylsäure-Copolymeren, Ethylen-(Meth)-Acrylester-Copolymeren mit 1 bis 20 C-Atomen im Alkoholteil, Copolymeren von Ethylen, Propylen, Buten, Isobuten, Diisobuten, Octadecen, Styrol und/oder Vinylacetat mit Malein-, Fumar- und/oder Ithaconsäure sowie deren Teilestern, auf der Basis von Polyalkylenoxidpolymeren, z.B. des Ethylenoxids und/oder des Propylenoxids und deren Modifizierungsprodukte, z.B. Pfropfpolymerisate von Polyurethanen, Kollophonium, Bitumen, natürlichen und synthetischen Kautschukpolymeren, sowie Dispersionen von Polyamiden, gesättigten Polyestern, ungesättigten Polyestern, Alkyd- oder sonstigen Lackharzen.

Bevorzugt werden Kunststoffdispersionen oder Bindemittellösungen verwendet, die nach dem Auftrocknen gute Wasserfestigkeiten erreichen. Insbesondere bevorzugt sind Latices oder Dispersionen von Butadien- oder (Ethyl)Acrylat-Copolymeren oder Ethylen-Vinylacetat-Copolymeren mit Estergehalten von 10 bis 85, vorzugsweise 15 bis 50 %, da diese bei guter Aufnahmefähigkeit für Füllstoffe gute Haftungen und Flexibilitäten sowie Witterungsstabilitäten besitzen und den Imprägnierungen Staubfreiheit verleihen.

Auch gegebenenfalls weichgemachte Latices von Polyvinylchlorid und seinen Copolymeren oder von Polychloropren und seinen Copolymeren kommen in Betracht.

Da die meisten der genannten Bindemittel den Imprägnierungen noch keine Feuerwidrigkeit verleihen, enthalten die Imprägnierungen im allgemeinen zusätzlich Füllstoffe, deren Aufgabe es ist, Feuerwidrigkeit zu vermitteln. Feuerwidrigkeit vermittelnde Füllstoffe sind beispielsweise Magnesium-, Aluminium- und Eisenhydroxide, -oxide und -oxidhydrate, Borate, Polyborate, insbesondere solche der zweiten Hauptgruppe des periodischen Systems, die Wasser abspalten können, z.B. Colemanit, Borocalzit, Zinkborat und Magnesiumborat, Graphit und blähfähige Graphite, z.B. solche mit eingelagertem Stickstoffoxid oder Schwefeldioxid, blähfähige Borate, Borsilikate, Alkalisilikate, Aluminosilikate, Glimmer, Vermikulite, Perlite, Calciumsulfate in allen Hydratationsstufen, Portland-, Tonerde-, Puzzolano- und Sorelzement, wasserhaltige Zeolithe, Silikate, Kieselsäuren, Ammoniumphosphate, insbesondere Ammoniumpolyphosphate, Aminphosphate, z.B. Ethylendiaminpolyphosphat und neutrales Ethylendiaminorthophosphat, Phosphate des Melamins und Phosphate des Calciums, Magnesiums, Aluminiums und anderer Metalle der zweiten, dritten und/oder achten Hauptgruppe des periodischen Systems, insbesondere solche, die noch Wasser oder Ammoniak abspalten können. Es kommen auch nicht wasserabspaltende Füllstoffe und auch organische Füllstoffe in Betracht, die die Brennbarkeit oder Brandlast vermindern können wie Carbonate, Silikate, Oxide, Kreiden, Dolomit, Eisenoxide, Titandioxid, Kupferoxide, Boroxide, Vanadinoxide, Wollastonit, Kaolin, Talkum, Glas, Aschen, Schlacken, Kohlenstoff, Gesteinsmehle, Kohle-, Holz-, Fruchtkern- oder Strohmehle, Phenolharze, Polyvinylchloride, Melamin, Melaminharze, Harnstoffharze, Komposte, Erze, Cellulosepulver und Asphalte. Solche Füllstoffe können z.B. in Form von Fasern, Nadeln, Pulvern, Kugeln, Hohlkugeln, Schaumstoffteilchen, Blättchen, Hanteln oder in sonstigen geometrischen Formen vorliegen und dann auch als Verstärkungsmaterialien dienen.

Bevorzugt sind Füllstoffe, die bei Raumtemperatur zu 5 % oder weniger in Wasser löslich sind und die der Imprägnierung bzw. dem Brandschutzelement auch intumeszierende Wirkung, d.h. im Falle der Beflammung erfolgt eine Volumenvergrößerung, verleihen. Bevorzugt sind auch Füllstoffe, deren mittlerer Korndurchmesser unter 3 mm liegt, besonders bevorzugt unter 1 mm, insbesondere unter 0,1 mm (z.B. bei 1 bis 30 $\mu$m).

Das Verhältnis von Bindemittel zu Dispersions- oder Lösungsmittel zu Füllstoff kann in weiten Grenzen variiert werden. Normalerweise beachtet man bei der Festlegung dieses Verhältnisses die Tränkbarkeit des Schaumstoffkörpers, die resultierende Viskosität der Imprägnierungszubereitung, den Gehalt des Gesamtsystems an organischer Brandlast und die gewünschte mechanische Endstabilität.

Das Gewichtsverhältnis von Bindemittel zu Füllstoff (beide als Feststoffe gerechnet) beträgt 1 bis 35 zu 99 bis 65. Bevorzugt liegt dieses Verhältnis im Bereich 5 bis 20 zu 95 bis 80. Das Gewichtsverhältnis der gesamten Feststoffe zu Lösungs-oder Dispergiermittel beträgt 50 bis 85 zu 50 bis 15. Vorzugsweise liegt dieses Ver hältnis im Bereich 60 bis 80 zu 40 bis 20. Es Können auch höhere Anteile an Lösungs- oder Dispergiermittel verwendet werden, wenn dies gewünscht wird, z.B. um eine leichte Durchimprägnierung zu erreichen.

Die erfindungsgemäßen Brandschutzelemente weisen vorzugsweise Sauerstoffindices (LOI) über 25 %, vorzugsweise über 35 %, besonders bevorzugt über 40 %, auf (gemessen nach ASTM 2863).

Besonders bevorzugte Sauerstoffindices werden im allgemeinen erreicht, wenn man als Füllstoffe Gipshydrat, Magnesium- und Aluminiumhydroxide, Ammoniumpolyphosphate und/oder Melaminphosphate mitverwendet. Die Brandklassifizierung gemäß DIN 4102 entspricht dann häufig den Klassen B 1 oder A 2.

Von besonderem Interesse sind Imprägnierungen, die neben sonstigen Hilfsmitteln als Bindemittel Dispersionen von Acryl- und/oder Vinylester-Copolymerisaten, z.B. Ethylen-Vinylacetat-Copolymere, enthalten und als Füllstoffe Magnesium- oder Aluminiumhydroxid, Colemanit, Ammoniumpolyphosphat, Ethylendiaminphosphat, Melamin, Blähgraphit und/oder Glaspulver. Solche bevorzugten Imprägnierungen werden ihrerseits vorzugsweise zur Imprägnierung elastischer Polyurethanschäume mit Raumgewichten unter 80 kg/m$^3$ verwendet, wobei das Raumgewicht des so hergestellten Brandschutzelementes nach der Imprägnierung und der Trocknung mindestens doppelt, vorzugsweise mehr als dreimal so groß ist wie das Raumgewicht des jeweils eingesetzten, unimprägnierten Schaumstoffkörpers.

Die Imprägniermischung weist vorzugsweise einen pH-Wert im Bereich von 5 bis 9, besonders bevorzugt 6 bis 7,5, auf. Die Imprägnierung der Schaumstoffkörper kann homogen oder inhomogen, partiell oder komplett erfolgen. Homogen bedeutet hier, daß der gesamte Schaumstoffkörper gleichmäßig dicht durchimprägniert wird. Inhomogen bedeutet hier, daß bestimmte Bereiche des Schaumstoffkörpers mehr Imprägnierungsmischung oder mehr Feststoffe aus der Imprägnierungsmischung aufgenommen haben, als andere Bereiche des Schaumstoffkörpers. Beispielsweise kann der oberflächennahe Bereich nach der Imprägnierung mehr Feststoffe aus der Imprägniermischung aufgenommen haben als innen liegende Bereiche, so daß eine Art Sandwich oder Schalenstruktur entsteht. Es kann auch durch Entmischungsvorgänge beim Imprägnieren und/oder dem späteren Trocknen eine Veränderung der Zusammensetzung des Imprägniermittels zwischen oberflächennahen und inneren Bezirken erfolgen. Dieses ist im Falle intumeszent wirksamer Imprägnierungen sogar häufig erwünscht, da die Intumeszenz im Außenbereich wirkungsvoller zum Tragen kommt. Erfindungsgemäße Brandschutzelemente können beispielsweise nur partiell (etwa halbseitig), nur äußerlich, nur punktuell oder nur musterartig (etwa gitterförmig) mit dem Imprägnierungsmittel ausgerüstet werden. Vorzugsweise wird der gesamte Schaumstoffkörper homogen imprägniert oder so, daß der oberflächennahe Bereich mehr von einer oder allen Komponenten aus der Imprägniermischung enthält als innenliegende Bereiche. Ein Beispiel für die letztgenannte Art der Imprägnierung ist die Herstellung eines Brandschutzelementes mit einer Anreicherung intumeszierender Bestandteile im Außenbereich und einer Anreicherung keramisierender Bestandteile im Innenbereich.

Bevorzugte erfindungsgemäße Brandschutzelemente enthalten einen reversibel komprimierbaren Polyurethanweichschaumstoff, einen rückstellfähigen Latexschaum, Melaminharzschaum oder ein rückstellfähiges voluminöses Faservlies, jeweils mit einem Raumgewicht von 5 bis 80 kg/m$^3$, vorzugsweise 15 bis 50 kg/m$^3$. Als Imprägnierung wird vorzugsweise eine 15 bis 85 %, vorzugsweise 50 bis 70 % Feststoff-aufweisende und auf pH-Werte zwischen 5 und 9, vorzugsweise 6,5 bis 7,5 eingestellte Aufschlämmung von beispielsweise Aluminiumhydroxid, Magnesiumhydroxid, Calciumborat, Gips, Glas, Alkalisilikaten, Kreide und/ oder Ammonium(poly)phosphat in Wasser und/oder Kunststofflatices, vorzugsweise in Latices oder Dispersionen aus natürlichen oder synthetischen kautschukelastischen Polymeren, insbesondere aus Copolymerisaten des Vinylacetats oder Ethylacrylats mit Ethylen verwendet. Bezogen auf das Füllstoffgewicht beträgt der Bindemittelanteil vorzugsweise zwischen 3 und 30 %, vorzugsweise zwischen 5 und 15 Gew.-%. Die Aufschlämmung der Imprägniermischung (mit Wasser) wird vorzugsweise auf Viskositäten zwischen 50 und 35.000 cP, besonders bevorzugt zwischen 100 und 3.500 cP, jeweils bei Raumtemperatur gemessen, eingestellt. Durch den Imprägnierungsprozeß, der z.B. bei 5 bis 90° C, vorzugsweise bei 15 bis 45° C, durchgeführt werden kann, werden in den Schaumstoffkörper, bezogen auf dessen spezifisches Rohgewicht, vorzugsweise zwischen 100 und 1.200, besonders bevorzugt zwischen 200 und 800 Gew.-%, Feststoffe eingebracht. Außerdem sind solche Imprägniermittelmengen bevorzugt, die beim Komprimieren des imprägnierten Schaumstoffkörpers um ca. 30 Vol.-% aus diesem nicht austropfen. Gegebenenfalls kann die Imprägnierung durch Zusatz von Thixotropiemitteln, hydraulisch abbindenden und/oder nach gewisser Lagerzeit durch Fällungsprozesse, Quellungsprozesse oder chemische Reaktionen zu Verdickungen führenden sonstigen Hilfsmitteln modifiziert werden. In Frage kommen hierzu beispielsweise gegebenenfalls modifizierte Stärke, Cellulosen, Polyacrylamide, Montmorillonite, Gelatinen, Pflanzenmehle, Seifen, Gips, Zement, Kieselsäuren, Carbonsäureamide, Faserstoffe, Precurser von hydrolytisch entstehenden Silizium-, Eisen-, Aluminium-und Magnesiumhydroxiden, Polycarbonsäuren, Polyharnstoffen und Alkalisilikate.

Erfindungsgemäße Brandschutzelemente können in den verschiedensten geometrischen Formen hergestellt werden, beispielsweise als schüttfähiges Granulat, z.B. mit mittleren Durchmessern zwischen 5 und 50 mm, in Gestalt von definierten Formkörpern, z.B. Profilen, Platten, Bandagen, Rollen, ziegelsteinähnlichen, rohrförmigen oder behälterartigen Formen. Sie werden in feuchtem Zustand eingebaut. Im feuchten Zustand sind die Brandschutzelemente elastisch. Erst beim Trocknen vermindert sich die Elastizität, wobei aber gleichzeitig die Haftung zu den Umgebungsmaterialien, die mechanische Festigkeit und die Härte zunehmen. Allein zur Erzielung des Brandschutzeffektes ist bei wasserfeuchten Brandschutzelementen eine Trocknung oder partielle Trocknung nicht unbedingt erforderlich. Auch nach dem Trocknen bleibt eine gewisse Vibrationsfestigkeit, Zähigkeit und Duktilität erhalten, so daß eine gegenüber den rein anorganischen Brandschutzelementen verminderte Sprödigkeit resultiert. Bindemittel und eine gegebenenfalls zugefügte oder anwesende (Rest-)Feuchtigkeit oder eine vorhandene Hygroskopie können eine staubfreie Bearbeitung erfindungsgemäßer Brandschutzelemente auch nach deren Trocknung bewirken.

Da erfindungsgemäße Brandschutzelemente in feuchtem, d.h. in imprägniertem, aber nicht getrocknetem und/oder gehärtetem Zustand einzubauen sind, werden sie entweder direkt vor dem Einbau hergestellt oder, bevorzugt, kommen sie in vorfabrizierter Form zur Anwendung, wobei sie dann nach der Herstellung bis zum Einbau zu verpacken sind. Die Verpackung muß dann, je nach der Zusammensetzung des angewendeten Imprägniergemisches, weitgehend undurchlässig sein für organische Lösungsmittel, Reaktivharze oder für Kohlensäure (z.B. im Falle von Silikatbindern) oder für Sauerstoff (im Falle von lufttrocknenden Lackharzen als Bindern) oder für Wasserdampf (im Falle von wäßrigen Imprägnierungen).

Vorteilhafterweise werden vorfabrizierte wasserfeuchte Brandschutzelemente mit Polyolefinfolien oder Milchkarton-Verbundmaterial verpackt. Eine 100 %ige Dichtigkeit der Verpackung ist häufig nicht unbedingt erforderlich, denn das Entweichen eines Teils der mit der Imprägnierung eingebrachten Feuchte und/oder eine während der Lagerzeit erfolgende partielle Härtung kann nach dem Einbau der noch immer feuchten und flexiblen Brandschutzelemente gegebenenfalls das Abtropfen von Imprägnierungsmitteln verhindern und/oder Trocken- bzw. Härtungszeiten verkürzen.

Die erfindungsgemäßen Brandschutzelemente können beispielsweise Anwendung finden als Fugenverschlußbänder, Brandschutzbandagen, Brandschutzabdeckungen, Brandsperren, Brandschutzauflagen, Brandschutzbeschichtungen, Brandschutzrohre, Brandschutzhalbschalen, Dichtungselemente, Platten, Prismen oder Granulate. Sie können z.B. unter Verwendung von üblichen Intumeszenz-Anstrichmitteln, Alkalisilikat, Vermikulit, Perlit, Ammoniumphosphaten oder Blähgraphit enthaltende Imprägnierungen intumeszent eingestellt werden und dann als Brandschutzmanschetten für Kunststoffrohre oder Rohrdurchführungen verwendet werden. Man kann hier beispielsweise so verfahren, daß durch eine äußere Blechabdeckung bei Beflammung die Intumeszenz nach innen konzentriert und ein geschütztes Rohr im Brandfall zusammengedrückt wird.

Die erfindungsgemäßen Brandschutzelemente können auch so ausgerüstet sein, daß sie im Brandfall keramisieren, z.B. durch die Kombination von Aluminiumhydroxiden mit Phosphaten oder Boraten (wie Colemanit) oder durch die Mitverwendung von Polyphosphaten, Mergeln oder Glasmehl. Durch Zumischungen von beispielsweise Asphalten, Graphiten, Phenolharzen, Melaminharzen, Kohlehydraten, Cellulosen und/oder Acrylnitrilpolymerisaten, die endotherm zu intensiver Verkoksung führen, Können ebenfalls gute Feuerbeständigkeiten erreicht werden.

Erfindungsgemäße Brandschutzelemente verbinden sich im allgemeinen gut haftend miteinander und mit den Umgebungsmaterialien und weisen auch selbst, insbesondere im komprimierten Einbauzustand, eine gute Rauchgasdichtigkeit auf, was sie besonders gut geeignet macht zum Aufbau von Kabel- und Rohrschotts mit guter Rauchgaswidrigkeit. Es kann gegebenenfalls von Vorteil sein, die erfindungsgemäßen Brandschutzelemente mit Verstärkungen zu versehen, um auch solange sie noch gut komprimierbar sind, eine gute Stabilität zu erreichen. Verstärkungen können z.B. in die Brandschutzelemente eingestochen und/oder mit Draht an ihnen befestigt sein. Insbesondere kleinere Durchbrüche, z.B. durch Brandwände, Können mit verstärkten Brandschutzelementen ohne weiteres wie mit Ziegelsteinen oder Bauplatten verschlossen werden. Dieses kann bereits beim Bau vorgesehen werden, d.h. es können Stellen vorgeplant werden, die zwar einen brandfesten Raumabschluß darstellen, aber jederzeit staubfrei mit Kabeldurchführungen versehen werden Können.

Besondere Ausführungsformen der vorliegenden Erfindung sind gekennzeichnet durch folgende Merkmale

- sie bestehen aus reversibel komprimierbaren Schaumstoffkörpern, die mit einer feuchten, Feuerwidrigkeit vermittelnden Imprägnierung getränkt und in diesem feuchten Zustand flexibel sind, vor Verlust durch Feuchtigkeit geschützt und aufbewahrt bzw. gelagert werden und in diesem feuchten, flexiblen Zustand eingebaut werden, woraufhin die enthaltene Feuchte unter Verfestigung des ursprünglichen weich-flexiblen Charakters entweichen kann.
- Sie enthaltende Schaumstoffkörper, die weitgehend homogen durchimprägniert sind.
- Sie enthaltende Schaumstoffkörper, die partiell, sandwichartig oder inhomogen imprägniert sind.
- Sie enthalten Wasser.
- Sie enthalten als Bindemittel in der Imprägnierung eine bei Raumtemperatur filmbildende Dispersion eines Ethylen-homo- und/oder -copolymerisates.
- Sie enthalten in der wasserfeuchten Imprägnierung eine Dispersion von Aluminiumhydroxid und/oder Magnesiumhydroxid und ein Bindemittel.
- Sie enthalten in der wasserfeuchten Imprägnierung Glas in Pulver- und/oder Perlchenform, z.B. sogenannte Mikroballons.
- Sie enthalten in der wasserfeuchten Imprägnierung Polyphosphate.
- Sie enthalten in der wasserfeuchten Imprägnierung Borate.
- Sie enthalten in der Imprägnierung eine nicht-wäßrige flüssige Phase.
- Sie intumeszieren im Brandfall.
- Sie keramisieren im Brandfall.
- Sie sind vor dem Einbau durch eine geeignete Verpackung gegen Feuchtigkeitsverlust geschützt.

Die vorstehenden besonderen Ausführungsformen können jeweils alleine oder in beliebigen, sich gegenseitig nicht ausschließenden Kombinationen realisiert sein. Aus den erfindungsgemäßen Brandschutzelementen lassen sich auch Vorrichtungen zum vorbeugenden Schutz gegen Brandausbreitung herstellen.

Beispiele

Die angegebenen Teile und Prozente beziehen sich hier, wie auch in der allgemeinen Beschreibung, auf das Gewicht, sofern nichts anderes vermerkt ist.

Die folgenden Beispiele wurden mit retikulierten Polyurethanweichschäumen durchgeführt, wie sie sonst für Matratzen und Polsterungen Verwendung finden, und zwar mit
Schaumstoff PU A, Raumgewicht 45 kg/m$^3$, Polyethertyp,
Schaumstoff PU B, Raumgewicht 22 kg/m$^3$, Polyethertyp
und
Schaumstoff PU C, Raumgewicht 52 kg/m$^3$, Polyestertyp.

Beispiel 1

Handelsüblicher Alkydharzklarlack (Bootslack) wurde mit Petrolether vom Siedebereich 50 bis 90° C im Gewichtsverhältnis 1:2 verdünnt.

Eine Mischung aus 100 Teilen Pentaerythrit, 50 Teilen sekundärem Ammoniumorthophosphat, 50 Teilen Kartoffelstärke und 50 Teilen Magnesiumhydroxid sowie 50 Teilen Melamin und 50 Teilen Aluminiumhydroxid wurde 24 Stunden auf einer Kugelmühle vermahlen. 300 Teile des erhaltenen Pulvers wurden mit 150 Teilen der verdünnten Lacklösung zu einer Dispersion verrührt. Deren Viskosität betrug bei 24° C 1.200 cP.

Mit dieser Dispersion wurde Schaumstoff PU C in Form eines Quaders der Größe 10 x 10 x 15 cm (= 78 g) durchgewalkt, wobei sämtliches Imprägniermittel (450 g) aufgenommen wurde. Der imprägnierte Quader wurde 2 Wochen bei Raumtemperatur in einer Aluminiumbox gelagert, dann herausgenommen. Er war flexibel und kompressibel, beim komprimierenden Verformen trat kein Imprägniermittel aus. Dann wurde das Schaumstoffstück in eine 10 cm tiefe, 6 cm breite und 15 cm lange Fuge zwischen zwei Schaumbetonblöcken eingedrückt, wo es wandbündig und oberflächengleich haftete. Danach wurde das Ganze 4 Wochen lang bei Raumtemperatur stehen gelassen. Während dieser Zeit verflüchtigte sich das Lösungsmittel und vernetzte der Bootslack. Der in der Fuge eingedrückte Schaumstoff war nunmehr hart, ließ sich zwar noch eindrücken, zeigte aber fast kein Rückstellvermögen mehr. Er war also nicht mehr flexibel und reversibel komprimierbar, sondern duktil geworden. Auch haftete der erhärtete Schaumstoff fest an den umgebenden Wandungen und schloß dicht ab.

Bei Beaufschlagung der Fuge mit einem Erdgasbrenner, der eine Temperatur von ca. 1.200° C erreichte, verhielt sich der Fugenverschluß intumeszent, d.h., an der Beflammungsstelle schäumte das Fugenmaterial unter Ausbildung eines isolierenden Carbonisierungsschaumes auf. Beim Entfernen der Flamme wurde kein Weiterbrennen beobachtet.

Beispiel 2

Ein 10 x 10 x 15 cm messender Block des Schaumstoffs PU B wurde mit 900 g einer Lösung durchgewalkt, die durch intensives Verrühren von 100 Teilen 25 %igem Natriumwasserglas mit 7 Teilen Diethylpyrocarbonat hergestellt worden war, wobei die gesamte Lösung aufgenommen wurde. Im Laufe von wenigen Stunden, während der der Imprägnierschaumstoff in einem Polyethylenbeutel unter Verschluß aufbewahrt wurde, reagierte das Pyrocarbonat mit dem Wasserglas und gelierte. Durch die dabei erfolgende Viskositätserhöhung wurde das Wasserglas im Schaumstoff festgehalten. Nach 4 Wochen wurde der noch elastische und rückstellfähige weiche Block aus der Verpackung genommen und in eine wie im Beispiel 1 beschriebene Fuge eingedrückt. Er schmiegte sich gut an und verschloß die Fuge dicht. Das Ganze wurde nunmehr 3 Monate bei Raumtemperatur in einem Innenraum stehen gelassen. Hierbei verdunstete das Wasser und der Schaumstoffblock verfestigte sich. Nach 4 Monaten war die Fugenfüllung hart und rauchgasundurchlässig. Bei Beflammung erfolgte eine geringfügige intumeszente Aufblähung, es wurden kein Brennen und kein Rauchgas festgestellt. Die Prüfung der Fuge nach DIN 4102 in einer Kleinbrandkammer (ETK) ergab, daß nach 90 Minuten noch keine Temperaturerhöhung auf über 150° C auf der flammenabgewandten Seite zu beobachten war. Der Sauerstoffindex (LOI) lag bei über 40 %.

Beispiel 3

Es wurde eine Aufschlämmung aus 300 Teilen handelsüblichem verzögertem Gipsputz, 50 Teilen 30 %igem Polychloroprenlatex und 150 Teilen Wasser hergestellt. Diese Mischung hatte nach 3 Min. bei Raumtemperatur eine Viskosität von 1.300 cp. Mit dieser Mischung wurde ein 10 x 10 x 15 cm messendes Stück Schaumstoff PU B durchgewalkt, wobei 500 g aufgenommen wurde. Der so imprägnierte Quader wurde 5 Wochen bei 25° C eingeschweißt in einer Polyethylentüte gelagert, wobei keine Imprägnierung auslief und die gute Flexibilität erhalten blieb. Nach dem Eindrücken des flexiblen und reversibel komprimierbaren Materials in eine Fuge, wie in Beispiel 1 beschrieben, ließ man 2 Monate bei Raumtemperatur austrocknen. Danach war die Fugenfüllung zäh, hart, duktil und nach Kompression nur noch wenig rückstellfähig.

Sie ließ sich staubfrei durchbohren und leicht mit einem Schraubendreher durchstoßen.

Im Kleinbrandkammertest, wie im Beispiel 2 beschrieben, wurden nach 60 Min. noch keine Temperaturen von über 150° C auf der flammenabgewandten Seite gemessen. Im Brandschachttest gemäß DIN 4102 wurde die Klassifizierung B 1 erreicht. Der Sauerstoffindex (LOI) lag bei über 50 %.

Beispiel 4

150 Teile eines in 25 %iger Verdünnung vorliegenden, handelsüblichen, elastischen und wasserbeständig auftrocknenden Ethylen-Vinylacetat-Copolymerisatlatexes (Wacker Chemie, Burghausen), 50 Teile Wasser, 350 Teile Aluminiumhydroxid (handelsübliche Qualität, Apyral®B2 Bayer AG), 3 Teile Eisenoxid-Rotpigment und 50 Teile handelsübliches Ammoniumpolyphosphat wurden zu einer Imprägnierungsformulierung angerührt, die einen pH-Wert von 6,8 und bei 23° C eine Viskosität von 2100 cp aufwies. Ein 10 x 10 x 15 cm messendes Stück Schaumstoff PU A (= 68 g) wurde mit 600 g dieser Lösung intensiv durchgewalkt, wobei die Imprägnierung komplett aufgenommen wurde. Der imprägnierte Schaumstoff wurde in Polyethylenfolie eingeschweißt. Nach 6 Monaten war er noch voll flexibel und elastisch rückstellfähig. Der Block wurde in eine Fuge, wie in Beispiel 1 beschrieben, eingedrückt und austrocknen gelassen. Nach 4 Wochen Trocknung bei Raumtemperatur hatte die Fugenfüllung eine lederartig-zähe, schwach eindrückbare Konsistenz. Die Haftung an den Fugenflanken war ausgezeichnet.

Bei Beflammung wurde nahezu keine Rauchentwicklung festgestellt, im Kleinbrandkammertest wurden 90 Min. Brenndauer ohne Erhöhung der rückseitigen Temperatur auf 150 ° C überstanden, der Brandschachttest gemäß DIN 4102 wurde von dem Material mit Klasse B 1 bestanden. Der Sauerstoffindex (LOI) lag bei über 40 %.

Das gleich Ergebnis wurde mit einem entsprechenden Fugenbauteil erzielt, das zunächst 7 Tage unter Wasser bei 19° C aufbewahrt und dann bei Raumtemperatur getrocknet wurde.

Beispiel 5

200 Teile Aluminiumhydroxid, 200 Teile Mikroglaskugeln (Ballotini 5000), 100 Teile Ammoniumpolyphosphat, 5 Teile Titan-Weißpigment (jeweils in handelsüblicher Qualität und mit mittleren Korngrößen unter 60 μm) wurden mit 150 Teilen des bereits in Beispiel 4 beschriebenen Latex und 50 Teilen Wasser angerührt. Diese Imprägnierflotte hatte eine Viskosität von 1.900 cp bei 20° C. Zwei Blöcke des Schaumstoffes PU A messend 10 x 10 x 15 cm wurden je mit 600 g dieser Imprägnierflotte stark durchimprägniert, zwei weitere entsprechende Schaumstoffblöcke je mit 1.100 g der Imprägnierflotte. In allen vier Fällen lief bei mässigem Komprimieren nur wenig überschüssige Flotte ab. Die imprägnierten Blöcke wurden 3 Monate lang, in Polyethylenfolie eingeschweißt, aufbewahrt. Dabei lief keine Flotte aus ihnen ab.

a) Dann wurde jeweils ein Muster der mit unterschiedlichen Mengen imprägnierten Schaumstoffe in eine Prüffuge eingebaut, wie sie in Beispiel 1 beschrieben worden ist. Beide Schaumstoffkörper waren gut handhabbar, hochflexibel und konnten gut in die Fuge eingebracht werden, wobei sie sich leicht dichtend an die Wände anlegten. Nach dem Trocknen war in beiden Fällen ein fest haftender Verbund mit den Flankenmaterial eingetreten, die Fugen waren rauchgasdicht. Das Fugenfüllmaterial hatte in beiden Fällen zäh-harten Charakter, hielt Stößen mit einem Hammer ohne zu platzen stand und ließ sich staubfrei bohren und leicht mit einem Schraubendreher durchstoßen. Im Brandschachttest wurde mit beiden Materialien eine B 1-Klassifizierung erreicht. Der Sauerstoffindex (LOI) lag in beiden Fällen bei über 40 %. Bei der Prüfung der beiden Fugen im Kleinbrandkammertest wurden 90 Min. ohne Temperaturerhöhung auf 150° C auf der feuerabgewandten Seite erreicht. Die Fugen blieben rauchgasdicht. Nach dem Brandversuch wurden die Brandschutzelemente ausgebaut. Es zeigte sich, daß die Oberflächen der Fugenfüllmaterialien zu einem festen Sinterkuchen keramisiert waren, was auf noch über längere Zeit sichere Fugenabschlüsse hinweist.

b) Die beiden anderen Blöcke mit noch feuchter Imprägnierung wurden 3 Tage im Umluftschrank bei 70° C getrocknet und waren dann gewichtskonstant. Beim Vermessen der Blöcke zeigte sich keine Dimensionsveränderung gegenüber dem ursprünglichen, nichtimprägnierten Schaumstoffkörper. Die beiden Blöcke hatten jetzt einen zäh-harten Charakter und Raumgewichte von 340 bzw. 620 kg/m$^3$.

Beispiel 6

Eine Matte aus Schaumstoff PU A von 5 cm Dicke, 10 cm Breite und 150 cm Länge mit trapezförmigem Querschnitt wurde mit 4.500 g der auch in Beispiel 5 verwendeten Imprägnierung imprägniert und aufgerollt. Die Rolle wurde in Polyolefinfolie eingeschweißt und behielt ihren flexibelelastischen Charakter für einen Zeitraum von mindestens 6 Monaten bei.

Mit einer solchen noch feuchten Rolle wurde dann ein Stromkabel mit einem Durchmesser von 3,5 cm oberflächendeckend einlagig umwickelt. Nach dem Trocknen haftete die Binde fest auf dem Kabelmantel und die Berührungsflächen der dichtend aufgebrachten Lagen der Binde waren fest miteinander verbunden. Die Ummantelung löste sich nicht von selbst und hatte einen zäh-harten Charakter. Das Raumgewicht lag bei 500 kg/m$^3$.

Das so präparierte Kabel wurde mit der ummantelten Zone durch eine Kleinbrandkammer so hindurchgeführt, daß die geschützte Zone im Flammenkegel des Brenners lag. Der Ofen wurde gemäß ETK (DIN 4102) beheizt. Es blieb noch nach 60 Min. funktionsfähig und es erfolgte nur eine geringe Qualmentwicklung.

Ein gleichzeitig beflammtes ungeschütztes Kabel fiel nach 16 Min. durch Kurzschluß aus. Davor und danach erfolgte eine starke Qualmentwicklung.

Beispiel 7

Aus Schaumstoff PU B wurde ein Stück von 24 cm Dicke, 25 cm Breite und 50 cm Länge geschnitten. Bei der bei 12,5 cm liegenden Mittellinie dieses Stückes wurden Bohrungen mit verschiedenen Durchmessern angebracht, die durch die 24 cm Breite hindurchgingen. Nunmehr wurde der Schaumstoffblock mit 750 g der auch in Beispiel 4 verwendeten Imprägnierung pro Liter Schaumstoffvolumen durchimprägniert. Durch die Bohrungen in dem feucht lagerfähigen, flexiblen Schaumstoffblock wurden anschließend Kabel mit entsprechenden Durchmessern gezogen. Danach wurde der Schaumstoffblock unter Kompression auf 70 % seines ursprünglichen Volumens in eine Brandwand eingebaut. Die Kompression erfolgte durch Belastung mit Schaumbetonelementen und Vermörtelung mit diesen. Bei der Kompression schloß sich das feuchte flexible Schaumstoffteil dicht um die Kabelmäntel. Nach dem Austrocknen waren die Kabel fest und rauchgasdicht mit dem zäh-harten Schaumstoffmaterial verbunden. Die Haftung des Schottmaterials an den Wandungen der Brandmauerdurchführung war sehr gut.

Beispiel 8

Es wurde wie im Beispiel 7 vorgegangen, jedoch wurde der durchbohrte Schaumstoffblock auf der Mittellinie durch sämtliche Bohrungen hindurchgeschnitten. Der Kabeldurchführungsblock wurde so in zwei Hälften zerlegt, die dann imprägniert wurden. Der halbierte, feuchte, flexibleelastische Block wurde jetzt viel einfacher mit Kabeln belegt, weil diese nicht mehr eingefädelt werden mußten. Nach dem Trocknen waren die beiden Hälften dicht und fest miteinander verbunden. Das gesamte Kabelschott war zäh-hart und wurde durch Bewegungen der Kabel nicht zerstört.

Beispiel 9

In einer Brandwand mit einer Wandstärke von 24 cm wurde eine Öffnung von 40 x 70 cm freigelassen. In diese Öffnung wurde eine Platte aus Schaumstoff PU A mit den ursprünglichen Abmessungen 50 x 90 x 24 cm eingesetzt, die mit 800 g der gleichen Imprägniermischung, wie in Beispiel 5 verwendet, pro Liter Schaumstoffvolumen durchimprägniert worden war. Beim Einsetzen dieser Platte mußte diese komprimiert werden, wobei keine Imprägnierung abtropfte. Durch die noch feuchte Platte wurden 8 Kabel hindurchgestoßen, wobei die Kabelenden vor dem Durchstechen mit einer aufsetzbaren Stahlspitze versehen worden waren. Die so ohne Schwierigkeiten durch das feuchte Schottmaterial hindurchgezogenen Kabel wurden von dem Schottmaterial sofort dicht umschlossen. Nach dem Trocknen war ein zäh-harter Verbund mit guter Rauchgasdichtigkeit entstanden. Das Schottmaterial hatte in ausgetrocknetem und komprimiertem Zustand des Schotts ein Raumgewicht von 580 kg/m$^3$.

Beispiel 10

In eine Schaumbetonwand (Wandstärke 20 cm) wurde je ein rundes Loch mit einem Durchmesser von 12,5 und 25 cm geschnitten. Aus dem Schaumstoff PU A wurden für diese Löcher runde Stopfen mit Durchmessern von 16 und 30 cm und je einer Länge von 20 cm geschnitten. Dann wurden die Stopfen mit der auch in Beispiel 4 verwendeten Imprägnierung (800 g/l Schaumstoffvolumen) ausgerüstet. Sie waren in feuchtem und gegen Austrocknen geschütztem Zustand ohne Auslaufen der Imprägnierung beliebig lange zu lagern. Diese Stopfen wurden in feuchtem, elastischem Zustand in die Löcher der Schaumbetonwand unter leichter Kompression 12 cm tief eingesetzt. Dann wurden durch den kleineren Stopfen 10 und durch den größeren Stopfen 20 mit einer Stahlspitze versehene Telefonkabel in etwa gleichen Abständen voneinander hindurchgezogen. Diese Kabel wurden von dem feuchten Material der Stopfen sofort dicht umfaßt. Nach dem Austrocknen lag ein fester, zähharter Verbund vor.

Diese Kabelschotts wurden in einer Kleinbrandkammer gemäß DIN 4102 (ETK) geprüft. Sie waren rauchgasdicht, auch wenn die Kammer mit einem Überdruck von ca. 2 mm Wassersäule (0,2 mbar) betrieben wurde. Nach 90 Min. waren Stopfenoberfläche und Kabelmäntel auf der feuerabgewandten Seite weniger warm als 150° C.

Beispiel 11

In einer Brandwand von 24 cm Dicke wurde eine Öffnung von 50 x 50 cm freigelassen. Diese Öffnung wurde mit feuchten Schaumstoffkörpern vom Typ PU A verschlossen, die reversibel komprimierbar und mit 500 g/l Schaumstoffvolumen der auch in Beispiel 4 verwendeten Imprägnierung ausgerüstet waren. Diese Brandschutzelemente hatten die Maße 10 x 10 x 20 cm. Das Verschließen der Öffnung geschah unter Kompression mit 6 Lagen von je 3 dieser Schaumstoffkörper, so daß eine etwa 10 cm dicke Schutzwand entstand. Nach dem Trocknen konnte das verklebte, zäh-harte Wandelement (Raumgewicht: 400 kg/m$^3$) staubfrei durchbohrt und mit Kabeln belegt werden. Es konnte auch mit Messer und Schraubendreher staubfrei bearbeitet und durchbohrt werden.

Das Wandelement erreichte bei Beflammung in der Kleinbrandkammer (ETK) nach 60 Min. auf der feuerabgewandten Seite noch nicht Temperaturen von über 150° C. Die Brandklassifizierung des Schottmaterials im Brandschachttest ergab die Klasse B 1.

## Beispiel 12

Es wurde wie bei Beispiel 11 verfahren, jedoch wurden die 500 g Imprägnierung pro Liter Schaumstoffkörper nur oberflächlich durch Wälzen in der Imprägniermischung eingearbeitet, so daß die Konzentration an Imprägniermaterial in oberflächennahen Bereichen erheblich größer war als im Inneren der Schaumstoffkörper.

Die so hergestellten Brandschutzelemente wiesen nach dem Trocknen in den ersten 2 cm Oberflächenschicht ein Raumgewicht von durchschnittlich 620 kg/m$^3$ auf, während es im Kernbereich nur etwa 180 kg/m$^3$ betrug.

Diese Brandschutzelemente waren vergleichbar gut lager-und einbaufähig wie die gemäß Beispiel 11 hergestellten Brandschutzelemente. Die Brandtests führten praktisch zu den gleichen Ergebnissen wie die Brandtests der gemäß Beispiel 11 erstellten Brandschutzelemente.

## Beispiel 13

Die auch im Beispiel 11 verwendeten Schaumstoffquader wurden auf gegenüberliegenden Flächen etwa 4 cm tief mit der auch im Beispiel 4 verwendeten Imprägnierlösung behandelt. In der Imprägnierungszone wurden 780 g/l Imprägniermischung pro Liter Schaumstoffvolumen aufgenommen. Die so imprägnierten Quader wiesen jetzt eine Art Sandwichstruktur auf. Sie waren in feuchtem Zustand reversibel komprimierbar und wurden, wie in Beispiel 11 beschrieben, zum Verschließen einer Öffnung in einer Brandschutzwand verwendet. Dabei kamen die imprägnierten Teile senkrecht aufeinander zu stehen. Beim Lagern in feuchtem Zustand blieb die Geometrie der Imprägnierung im wesentlichen erhalten. Das analog Beispiel 11 verschlossene Brandschott zeigte nach dem Trocknen in mechanischer Festigkeit und im Brandverhalten das praktisch gleich günstige Verhalten wie das Brandschott im Beispiel 11.

## Beispiel 14

Eine 5 cm dicke Matte aus Latex-Schaum, wie er für die Herstellung von Matratzen verwendet wird, wurde mit 600 g/l Latex-Volumen der auch in Beispiel 4 verwendeten Imprägniermischung durchimprägniert. Die Matte wurde in 1 x 2 m messende Teile durchgeschnitten, die aufgerollt und noch feucht in Polyethylenfolie eingeschweißt wurden. So war sie nahezu beliebig lange lagerfähig.

Aus der feuchten Matte wurden 30 cm breite Bahnen geschnitten und auf eine Kabeltrasse gelegt, die einen U-förmigen Querschnitt hatte und 25 cm lichte Breite aufwies. Dabei bildete die feuchte Matte in der Kabeltrasse durch Angleichung an den U-förmigen Querschnitt eine muldenartige Form. Auf der so verformten feuchten Matte wurden die Kabel verlegt und anschließend mit einem weiteren Stück der feuchten Matte so abgedeckt, daß an den Rändern die Flanken der Unterlage und der abdeckenden gewölbten feuchten Matte sich berührten. Nach dem Trocknen waren die Matten verklebt und bildeten einen zäh-harten Brandschutz für die zwischen ihnen liegenden Kabel.

## Beispiel 15

Eine handelsübliche, filmbildende Polyurethandispersion wurde mit Wasser auf 20 % Feststoffgehalt verdünnt. 200 Teile dieser Dispersion wurden mit 50 Teilen handelsüblichem Ammoniumpolyphosphat, 200 Teilen Aluminiumhydroxid und 150 Teilen Glasmehl zu einer Imprägnierflotte mit einer Viskosität von 1.900 cp bei 25° C und einem pH-Wert von 7 angemischt. Mit dieser Flotte wurde ein Rohr aus dem Schaumstoff PU B (Wandstärke 3 cm, lichte Weite 3 cm) in einer Menge von 700 g/l Schaumstoffvolumen durchimprägniert. Dieses Rohr wurde feucht in Polyolefinfolie eingeschweißt. Es blieb flexibel und reversibel komprimierbar.

Durch dieses Rohr wurden nach einer Lagerzeit von 12 Wochen und dem Entfernen der Polyolefinfolie drei Telefonkabel gelegt und dann das Rohr in feuchtem Zustand S-förmig auf einer 30 cm breiten Kabelpritsche verlegt. Nach dem Trocknen befanden sich die Kabel in einer formstabilen Schutzhülle.

Bei Beflammung in einer Kleinbrandkammer blieben die Kabel länger als 60 Min. funktionsfähig. Nach der Entnahme aus der Brandkammer zeigte sich, daß die Schutzhülle weitgehend in einen keramisierten Zustand übergegangen war.

### Beispiel 16

Es wurde wie bei Beispiel 15 gearbeitet, jedoch wurde anstelle der Polyurethandispersion ein handelsüblicher Styrol-Butadien-Copolymerisat-Latex verwendet, wie er sonst für die Herstellung von Teppichrückenbeschichtungen eingesetzt wird. Die wie in Beispiel 15 durchgeführten Tests führten zu Ergebnissen analog Beispiel 15.

### Beispiel 17

Es wurde wie bei Beispiel 15 gearbeitet, jedoch wurde anstelle der Polyurethandispersion eine Polyvinylacetat-Dispersion verwendet, wie sie zur Herstellung feuchtigkeitsresistenter Verklebungen im Handel erhältlich ist. Die wie in Beispiel 15 durchgeführten Tests führten zu Ergebnissen analog Beispiel 15.

Nach dem Austrocknen hatte die Schutzhülle jedoch eine höhere mechanische Festigkeit und haftete stärker auf der Kabelpritsche.

Die Beispiele 15 bis 17 zeigen prototypisch an, daß auch kompliziert verschlungene Kabelführungen vorteilhaft mit erfindungsgemäßen Brandschutzelementen ausgestattet werden können.

### Beispiel 18

75 Teile eines handelsüblichen 60 %igen Latex aus Ethylen-Vinylacetat-Copolymerisat (Vinylacetat-Gehalt 50 %) wurden mit 125 Teilen Wasser sowie 50 Teilen Melaminphosphat, 2 Teilen Eisenoxid-Rotpigment und 350 Teilen Stuckgips unter Zusatz von 1,2 Teilen Dibutylphosphat vermischt. Die Mischung hatte bei 20° C eine Viskosität von 2.300 cp.

Es wurde eine zweite Imprägnierungsmischung hergestellt, bei der anstelle des Stuckgipses 500 Teile Rotschlamm aus der Aluminiumfabrikation (Feststoffgehalt 70 %) verwendet wurden.

Es wurde eine dritte Imprägnierungsmischung hergestellt, bei der anstelle des Stuckgipses 500 Teile einer 1:1 Mischung aus Aluminiumhydroxid und Mikroglaskugeln (mittlerer Kugeldurchmesser 25 $\mu$m) sowie 2 Teile Dibutylphosphat verwendet wurden. Die Viskosität bei 23° C betrug 1.300 cP.

Mit diesen drei Mischungen wurde jeweils ein Quader aus dem Schaumstoff PU B mit den Abmessungen 10 x 10 x 50 cm in einer Menge von 600 g/l Schaumstoffvolumen durchimprägniert. Es wurden in allen drei Fällen hochflexible Brandschutzelemente erhalten, die in feuchtem Zustand (auch im Falle von Stuckgips) ihre Flexibilität beibehielten. Bei der Lagerung über 6 Monate (eingeschweißt in Polyethylenfolien) lief keine Imprägnierung aus.

Im Fugenversuch und anschließendem Brandversuch, wie im Beispiel 2 beschrieben, wurden in allen drei Fällen gut haftende zäh-harte Verschlüsse erhalten. Die rückseitige Temperatur stieg während 90 Min. in allen drei Fällen nicht über 150° C, die Brandklassifizierung gemäß DIN 4102 erreichte B 1.

Das Glaskugeln enthaltende Material bildete beim Brandversuch in der Kleinbrandkammer einen festen Sinterkuchen im Beflammungsbereich.

### Patentansprüche

1. Brandschutzelemente, die
   a) Schaumstoffkörper, die im feuchten Zustand elastisch sind und
   b) eine flüssige Feuerwidrigkeit vermittelnde Imprägnierung enthalten, dadurch gekennzeichnet, daß die Imprägnierung anorganische und/oder organische Bindemittel, Füllstoff und ein Lösungs-oder Dispergiermittel enthält, wobei das Gewichtsverhältnis von Bindemittel zu Füllstoff von 1 bis 35 zu 99 bis 65 und das Gewichtsverhältnis der gesamten Feststoffe zu Lösungs- oder Dispergiermittel 50 bis 85 zu 50 bis 15 beträgt, der nicht-flüchtige Anteil der Imprägnierung mehr als 100 Gew.-%, bezogen auf den ursprünglichen Schaumstoffkörper, ausmacht, sich a) und/oder b) nach dem Einbau durch Trocknen verfestigen und die Brandschutzelemente vor dem Einbau gegen Feuchtigkeitsverlust geschützt werden.

2. Brandschutzelemente nach Anspruch 1, dadurch gekennzeichnet, daß es sich bei der Komponente a) um weiche Polyurethanschäume oder um Schaumstoffkörper auf der Basis von Asbest-, Mineralfaser-, Silicon-, Phosphazenschäumen, gemischt anorganischorganischen Schaumstoffen, Celluloseschäumen, Proteinschäumen, Naturschwämmen, Phenolharz-, Harnstoffharz-, Melaminharz-, Dicyandiamidharz- oder Polyimidharzschaumstoffen, Schaumstoffe auf der Basis von in Dispersion, Lösung oder direkt verschäumten Natur- oder Synthesekautschuken, Polyolefinen, Polyacrylaten, Polyamiden, Polyethern, Polyestern, Polyvinylhalogeniden, Polyvinylestern oder Polyvinylethern handelt.

3. Brandschutzelemente nach Ansprüchen 1 und 2, dadurch gekennzeichnet, daß die Schaumstoffkörper eine Porenzahl von 5 bis 500 pro cm$^2$, eine Luftdurchlässigkeit von 20 bis 250 l pro 100 cm$^2$ bei 5 cm Dicke und 10 Pascal Unterdruck, so große Rückstellkräfte und Elastizitäten, daß bei 50 %iger Kompression nach 1 Stunde bei 20°C zu mindestens 75 % die ursprüngliche Gestalt wieder hergestellt wird, beim Einwirken der Komponente b) eine lineare Quellung von unter 15 %, eine Komprimierbarkeit auf mindestens 50 % des Normalvolumens und Raumgewichte von weniger als 200 kg/m² aufweisen.

4.   Brandschutzelemente nach Ansprüchen 1 bis 3, dadurch gekennzeichnet, daß es sich bei der Komponente b) um Lösungen, Emulsionen, Dispersionen oder Aufschlämmungen handelt, die mindestens eine bei Raumtemperatur flüssige Komponente enthalten.

5.   Brandschutzelemente gemäß Ansprüchen 1 bis 4, dadurch gekennzeichnet, daß die Komponente b) eine wäßrige Phase enthält.

6.   Brandschutzelemente nach Ansprüchen 1 bis 5, dadurch gekennzeichnet, daß sie Bindemittel, Füllstoffe und Hilfsstoffe enthalten, wobei letztere die rheologischen Eigenschaften, die Farbe, die Oberflächenspannung, den Geruch, das Feststoff/Wasser-Verhältnis, die Sedimentation, die biologische Beständigkeit, den Alterungsschutz, die Intumeszenz, die Strahlenreflexion, die Verdickung, den pH-Wert und/oder den Korrosionsschutz einstellen oder modifizieren.

7.   Brandschutzelemente nach Anspruch 6, dadurch gekennzeichnet, daß sie als Bindemittel Alkalisilikatlösungen, Lösungen oder Dispersionen von Kieselsolen, Mischsilikaten, Zementen, Gipsen, Magnesiumoxichlorid, Zinkphosphat, Magnesiumphosphat, Aluminiumphosphat, Zinkphosphonat, Magnesiumphosphonat, Aluminiumphosphonat, sonstigen Sulfaten, Orthophosphaten, Metaphosphaten, Pyrophosphaten, Polyphosphaten, Phosphonaten, Boraten und/oder Polyboraten von Ammoniak, Aminen oder Metallen der ersten bis dritten Gruppe des periodischen Systems der Elemente, gegebenenfalls zusätzlich Phosphorsäuren, Borsäuren und/oder neutral reagierende und schwerlösliche Ammoniumphosphate und/oder Ammoniumpolyphosphate und/oder wäßrige Kunststofflatices oder Kunststoffdispersionen und/oder wasserlösliche Proteine und/oder Kohlehydrate und/oder Polycarbonsäuren, Salze von Polycarbonsäuren, Polyvinylether, Polyvinylalkohole, Polyacrylamide, Polyether, Polyalkylenoxide, Polyvinylpyrrolidone, Polyacetale, Polyurethane, Polymethylolverbindungen auf der Basis von Phenolen, Harnstoffe, Dicyandiamid, Melamin, Polyvinylamide, Polymere auf der Basis Methacryl-, Acryl-, Malein-, Fumar- oder Itaconsäure und deren Metall-, Ammonium- und Imidsalze und/oder Copolymere, die mehr oder weniger wasserlöslich sind und solche Gruppierungen enthalten, daß sie als Füllstoffe Magnesium-, Aluminium- und/oder Eisenhydroxide, -oxide und/oder Oxidhydrate, Borate, Polyborate, Graphit, blähfähige Graphite, blähfähige Borate, Borsilikate, Alkalisilikate, Aluminosilikate, Glimmer, Vermikulite, Perlite, Calciumsulfate, Portland-, Tonerde-, Puzzolano- und/oder Sorelzement, wasserhaltige Zeolithe, Silikate, Kieselsäuren, Ammoniumphosphate, Phosphate des Melamins, Phosphate des Calciums, Magnesiums, Aluminiums und andere Metalle der zweiten, dritten und/oder achten Hauptgruppe des periodischen Systems und/oder Carbonate, Silikate, Oxide, Kreiden, Dolomit, Eisenoxide, Titandioxid, Kupferoxide, Boroxide, Vanadinoxide, Wollastonit, Kaolin, Talkum, Glas, Aschen, Schlacken, Kohlenstoff, Gesteinsmehle, Kohle-, Holz-, Fruchtkern- und/oder Strohmehle, Phenolharze, Polyvinylchloride, Melamin, Melaminharze, Harnstoffharze, Komposte, Erze, Cellulosepulver und/oder Asphalte enthalten.

## Claims

1.   Fire retardant elements which comprise
     a) foam mouldings which are elastic in the moist state and
     b) a liquid flameproofing impregnation, characterised in that the impregnation contains inorganic and/or organic binders, filler and a solvent or dispersant, where the binder:filler weight ratio is from 1 to 35 : 99 to 65 and the weight ratio between the total solids content and the solvent or dispersant is 50 to 85 : 50 to 15, the non-volatile content of the impregnation amounts to more than 100% by weight, based on the original foam moulding, a) and/or b) solidify after installation as a result of drying, and the fire retardant elements are protected against loss of moisture before installation.

2.   Fire retardant elements according to Claim 1, characterised in that component a) are soft polyurethane foams or foam mouldings based on asbestos, mineral fibres, silicone, phosphazene foams, mixed inorganic/organic foams, cellulose foams, protein foams, natural sponges, phenolic resin foams, urea resin foams, melamine resin foams, dicyandiamide resin foams or polyimide resin foams, foams based on natural or synthetic rubbers foamed in dispersion, solution or directly, polyolefins, polyacrylates, polyamides, polyethers, polyesters, poly(vinyl halides), poly(vinyl eaters) or poly(vinyl ethers).

3. Fire retardant elements according to Claims 1 and 2, characterised in that the foam mouldings have a pore number of from 5 to 500 per $cm^2$, a permeability to air of 20 to 250 l per 100 $cm^2$ at a thickness of 5 cm and a reduced pressure of 10 Pascals, resiliences and elasticities sufficiently great so that the original shape is reestablished to at least 75% on 50% compression after 1 hour at 20°C, a linear swelling of less than 15% on exposure to component b), a compressibility to at least 50% of the normal volume and specific gravities of less than 200 kg/$m^3$.

4. Fire retardant elements according to Claims 1 to 3, characterised in that component b) are solutions, emulsions, dispersions or slurries which contain at least one component which is liquid at room temperature.

5. Fire retardant elements according to Claims 1 to 4, characterised in that component b) contains an aqueous phase.

6. Fire retardant elements according to Claims 1 to 5, characterised in that they contain binders, fillers and auxiliaries, the latter adjusting or modifying the rheological properties, the colour, the surface tension, the odour, the solids/water ratio, the sedimentation, the biological stability, the ageing protection, the intumescence, the reflectivity, the thickening, the pH and/or the corrosion protection.

7. Fire retardant elements according to Claim 6, characterised in that they contain, as binders, alkali metal silicate solutions, solutions or dispersions of silica sols, mixed silicates, cements, plasters, magnesium oxychloride, zinc phosphate, magnesium phosphate, aluminium phosphate, zinc phosphonate, magnesium phosphonate, aluminium phosphonate, other sulphates, orthophosphate, metaphosphates, pyrophosphates, polyphosphates, phosphonates, borates and/or polyborates of ammonia, amines or metals of the first to third group of the Periodic Table of the Elements, if appropriate additionally phosphoric acids, boric acids and/or neutral and sparingly soluble ammonium phosphates and/or ammonium polyphosphates and/or aqueous plastic latices or plastic dispersions and/or water-soluble proteins and/or carbohydrates and/or polycarboxylic acids, salts of polycarboxylic acids, poly-

(vinyl ethers), poly(vinyl alcohols), polyacrylamides, polyethers, poly(alkylene oxides), polyvinylpyrrolidones, polyacetals, polyurethanes, polymethylol compounds based on phenols, ureas, dicyandiamide, melamine, polyvinylamides, polymers based on methacrylic, acrylic, maleic, fumaric or itaconic acid and their metal, ammonium and imide salts and/or copolymers which are more or less water-soluble and contain such groups, in that they contain, as fillers, the hydroxides, oxides and/or oxide hydrates of magnesium, aluminium and/or iron, borates, polyborates, graphite, expandable graphites, expandable borates, borosilicates, alkali metal silicates, aluminosilicates, mica, vermiculites, perlites, calcium sulphates, Portland cement, aluminous cement, pozzolanic cement and/or Sorel cement, water-containing zeolites, silicates, silicas, ammonium phosphates, phosphates of melamine, phosphates of calcium, magnesium, aluminium and other metals of the second, third and/or eighth main group of the Periodic Table and/or carbonates, silicates, oxides, chalks, dolomite, iron oxides, titanium dioxide, copper oxides, boron oxides, vanadium oxides, wollastonite, kaolin, talc, glass, ashes, slags, carbon, powdered rock, powdered coal, powdered wood, powdered fruit stones and/or powdered straw, phenolic resins, poly(vinyl chlorides), melamine, melamine resins, urea resins, composts, ores, cellulose powders and/or asphalts.

## Revendications

1. Eléments de protection contre le feu, qui comprennent
   a) des corps en mousse qui sont élastiques à l'état humide et
   b) une composition liquide d'imprégnation conférant le caractère ignifuge, caractérisés en ce que la composition d'imprégnation contient des liants inorganiques et/ou organiques, une charge et un solvant ou un agent dispersant, le rapport en poids du liant à la charge ayant une valeur de 1-35 à 99-65 et le rapport en poids des charges totales au solvant ou à l'agent dispersant ayant une valeur de 50-85 à 50-15, la fraction non volatile de la composition d'imprégnation dépasse 100 % en poids par rapport au corps initial de mousse, les composants a) et/ou b) se durcissent par séchage après leur incorporation et les éléments de protection contre le feu sont protégés d'une perte d'humidité avant l'incorporation.

**2.** Eléments de protection contre le feu suivant la revendication 1, caractérisés en ce que le constituant a) comprend des mousses de polyuréthanne souples ou des corps cellulaires à base de mousse d'amiante, de fibres minérales, de silicone, de phosphazène, des mousses inorganiques - organiques mixtes, des mousses cellulosiques, des mousses de protéines, des éponges naturelles, des mousses de résine phénolique, de résine d'urée, de résine de mélamine, de résine de dicyanodiamide ou de résine de polyimide, des mousses à base de caoutchoucs naturels ou synthétiques rendus cellulaires en dispersion, en solution ou directement, de polyoléfines, de polyacrylates, de polyamides, de polyéthers, de polyesters, de polyhalogénures de vinyle, de polyesters de vinyle ou de polyéthers de vinyle.

**3.** Eléments de protection contre le feu suivant les revendications 1 et 2, caractérisés en ce que les corps cellulaires ont un nombre de pores de 5 à 500 par cm$^2$, une perméabilité à l'air de 20 à 250 litres par 100 cm$^2$ pour une épaisseur de 5 cm et une dépression de 10 Pascals, des forces de rappel et des élasticités de grandeur telle que, pour une compression de 50 %, la forme initiale soit rétablie à 75 % au moins, après une heure à 20°C, et présentent lors de l'action du composant b) un gonflement linéaire de moins de 15 %, une compressibilité à 50 % au moins du volume normal et des masses volumiques apparentes de moins de 200 kg/m$^3$.

**4.** Eléments de protection contre le feu suivant les revendications 1 à 3, caractérisés en ce que le composant b) consiste en solutions, émulsions, dispersions ou suspensions qui contiennent au moins un composant liquide à la température ambiante.

**5.** Eléments de protection contre le feu suivant les revendications 1 à 4, caractérisés en ce que le composant b) contient une phase aqueuse.

**6.** Eléments de protection contre le feu suivant les revendications 1 à 5, caractérisés en ce qu'ils contiennent des liants, des charges et des substances auxiliaires, ces dernières réglant ou modifiant les propriétés rhéologiques, la couleur, la tension superficielle, l'odeur, le rapport matière solide/eau, la sédimentation, la stabilité biologique, la protection contre le vieillissement, l'intumescence, la réflexion des rayons, l'épaississement, la valeur de pH et/ou la protection contre la corrosion.

**7.** Eléments de protection contre le feu suivant la revendication 6, caractérisés en ce qu'ils contiennent comme liants, des solutions de silicates alcalins, des solutions ou dispersions de sols de silice, des silicates mixtes, des ciments, des gypses, de l'oxychlorure de magnésium, du phosphate de zinc, du phosphate de magnésium, du phosphate d'aluminium, du phosphonate de zinc, du phosphonate de magnésium, du phosphonate d'aluminium, d'autres sulfates, des orthophosphates, des métaphosphates, des pyrophosphates, des polyphosphates, des phosphonates, des borates et/ou des polyborates d'ammoniac, d'amines ou de métaux des premier à troisième Groupes du Système Périodique des Eléments, en outre le cas échéant des acides phosphoriques, des acides boriques et/ou des phosphates d'ammonium et/ou polyphosphates d'ammonium à réaction neutre et peu solubles et/ou des latex aqueux de matières plastiques ou des dispersions aqueuses de matières plastiques et/ou des protéines et/ou des glucides et/ou des acides polycarboxyliques hydrosolubles, des sels d'acides polycarboxyliques, des polyéthers de vinyle, des polyalcools vinyliques, des polyacrylamides, des polyéthers, des polyoxydes d'alkylènes, des polyvinylpyrrolidones, des polyacétals, des polyuréthannes, des composés du type polyméthylol à base de phénols, des urées, du dicyanodiamide, de la mélamine, des polyvinylamides, des polymères à base d'acide méthacrylique, acrylique, maléique, fumarique ou itaconique et leurs sels de métaux, d'ammonium et d'imides et/ou des copolymères qui sont plus ou moins hydrosolubles et qui contiennent des groupements tels qu'ils renferment comme charges des hydroxydes, oxydes et/ou oxydes hydratés de magnésium, d'aluminium et/ou de fer, des borates, des polyborates, du graphite, des graphites pouvant gonfler, des borates pouvant gonfler, des borosilicates, des silicates alcalins, des aluminosilicates, du mica, de la vermiculite, de la perlite, des sulfates de calcium, du ciment Portland, du ciment alumineux, du ciment à la pouzzolane et/ou du ciment Sorel, des zéolites contenant de l'eau, des silicates, des acides siliciques, des phosphates d'ammonium, des phosphates de mélamine, des phosphates de calcium, de magnésium, d'aluminium et d'autres métaux des deuxième, troisième et/ou huitième Groupes principaux du Système Périodique et/ou des carbonates, des silicates, des oxydes, des craies, de la dolomie, des oxydes de fer, du dioxyde de titane, des oxydes de cuivre, des oxydes de bore, des oxydes de vanadium, de la wolastonite, du kaolin, du talc, du verre, des cendres, des scories, du carbone, des poudres minérales, du charbon, du bois, des noyaux de fruits et/ou de la paille en poudre, des résines phénoliques, des polychlorures de vinyle, de la mélamine, des résines de mélamine, des résines d'urée, des composts, des minerais, de la cellulose en poudre et/ou de l'asphalte.